**Europäisches Patentamt**

**European Patent Office**

**Office européen des brevets**

(19)

(11) Veröffentlichungsnummer: **0 241 756**
**A1**

(12) # EUROPÄISCHE PATENTANMELDUNG

(21) Anmeldenummer: **87104154.7**

(22) Anmeldetag: **20.03.87**

(51) Int. Cl.⁴: **A 61 C 13/225**

(30) Priorität: **09.04.86 DE 3612011**

(43) Veröffentlichungstag der Anmeldung: **21.10.87**
**Patentblatt 87/43**

(84) Benannte Vertragsstaaten: **AT BE CH ES FR GB GR IT LI LU NL SE**

(71) Anmelder: **Hackstein, Peter, Hampermühle, D-5805 Breckerfeld (DE)**

(72) Erfinder: **Hackstein, Peter, Hampermühle, D-5805 Breckerfeld (DE)**

(74) Vertreter: **Schröter, Martin, Dipl.-Ing., Im Tückwinkel 22, D-5860 Iserlohn (DE)**

(54) **Dentaltechnisches Geschiebe.**

(57) Bei einem dentaltechnischen Geschiebe mit einem restgebißseitigen Matrizenteil (2) und einem darin mit einer Gleitführung aufnehmbaren prothesenseitigen Patrizenteil (1) ist zur lösbaren Festsetzung der beiden Teile gegeneinander im unteren – in situ schleimhautnahen – Bereich des Patrizenteiles (1) ein Aufnahmegehäuse (3) befestigt, in welches eine Riegelgehäuse (4) eingeschoben und fixiert ist, in dem ein Verriegelungsbolzen (5) mit einem zum Matrizenteil (2) gerichteten, senkrecht zur Verschieberichtung des Patrizenteiles (1) abstehenden Riegel (51) gegen einen Federdruck von außen längsverschiebbar ist. Dabei bildet der Riegel (51), der durch einen Längsschlitz (41) im Riegelgehäuse (4) nach außen ragt, das gegenüber dem Matrizenteil (2) freigebende bzw. verriegelnde Element.

Ein solches dentaltechnisches Geschiebe ermöglicht mit seiner Verriegelungsvorrichtung auch einen restgebißseitigen intrakoronalen Eingriff, wie er bei den bekannten Geschieben bzw. deren Verriegelungsvorrichtungen nicht möglich ist.

EP 0 241 756 A1

Die Erfindung betrifft ein dentaltechnisches Geschiebe nach dem Oberbegriff des Anspruchs 1. Es handelt sich dabei um intrakoronale Präzisionsgeschiebe, wie sie insbesondere für herausnehmbare Brücken und partielle Prothesen eingesetzt werden. Nach bekannten Verfahren wird dabei das Matrizenteil direkt an- bzw. eingegossen oder angelötet.

Es ist bekannt, die beiden Teile eines dentaltechnischen Geschiebes gegeneinander in der Befestigungsposition zu fixieren. Bei einem bekannten Geschiebe ist dabei am Patrizenteil am unteren Ende eine federnde Klinke ausgebildet die in eine Nut oder Einsenkung am Matrizenteil eingreift. Durch Zug in Richtung der Gleitführung kann die Verbindung wieder gelöst werden. Als nachteilig erweist sich jedoch, daß durch diese relativ starke notwendige Zugbeanspruchung die Krone auf Zug belastet wird. Bei häufiger Aktivierung der Prothese wird außerdem die Verriegelungsvorrichtung beansprucht und verschleißt daher. Bei einem aus der US-PS 4 345 901 bekannten aktivierbaren dentaltechnischen Geschiebes wird ein in dem Matrizenteil gelagerter Bolzen durch eine Spiralfeder in eine dafür vorgesehene Aussparung im Patrizenteil gedrückt. Damit ergibt sich eine zuverlässige Retention. Aber auch bei diesem Geschiebe erfolgt eine unerwünschte Beanspruchung der Krone bzw. des Restgebisses. Abnutzungen, insbesondere in der Ausnehmung im Matrizenteil, lassen sich nicht vermeiden. Intrakoronal ist ein solches Geschiebe nicht anwendbar.

Die Aufgabe der Erfindung besteht darin, ein dentaltechnisches Geschiebe der eingangs genannten Art vorzuschlagen, welches mit relativ geringem Platzbedarf an den verschiedensten zahntechnischen Teilprothesen im Doublierverfahren anbringbar ist und insbesondere eine intrakoronale Verriegelung einer zahntechnischen Teilprothese ermöglicht.

Gelöst wird diese Erfindungsaufgabe mit einem Geschiebe mit sämtlichen Merkmalen des Anspruchs 1.

Ein solches erfindungsgemäßes dentaltechnisches Geschiebe ermöglicht mit seiner Verriegelungsvorrichtung auch einen restgebißseitig intrakoronalen Eingriff, wie er bei den bekannten Geschieben bzw. deren Verriegelungsvorrichtungen nicht möglich ist.

Bekannt ist aus der DE-OS 1 516 434 eine Vorrichtung zur lösbaren Befestigung an Kronen oder anderen restgebißseitigen Gegenstücken, die es ermöglicht, die zahntechnische Teilprothese im wesentlichen ohne Zug- oder Druckeinwirkung auf einem restgebißseitigen Gegenstück zu befestigen. In nicht näher beschriebener Weise soll dabei ein prothesenseitiges Riegelgehäuse an einem Brückenglied einer Prothese angeordnet werden. In diesem Gehäuse ist von einer Seite her, die mit einer Kappe bzw. mit einem Gewindestopfen verschraubt ist, ein Riegelbolzen eingesetzt, der teilweise am anderen Ende des Gehäuses herausragt. Die Verschiebung dieses Bolzens im Gehäuse ist gegen den Druck einer eingesetzten Feder möglich. Kronenseitig soll dabei ein dünner lamellenartiger Steg angeformt sein, der in einem Einschnitt am Riegelgehäuse eingreift. In der Verriegelungsstellung greift der Riegelbolzen in eine hinterschnitte Ausnehmung am Steg ein. Damit soll die Verbindung der Prothese mit der Krone gesichert werden. Zur Entriegelung wird der Verriegelungsbolzen gegen den Druck der Feder mit einem im Querschnitt verringerten Abschnitt in dem Bereich der Ausnehmung am Steg verschoben, so daß die Prothese abgenommen werden kann. Eine solche Vorrichtung läßt sich jedoch nicht oder mit sehr erheblichem Platzbedarf mit einem Geschiebe kombinieren. Es erweist sich als außerordentlich schwierig, im Doublierverfahren kronenseitig den notwendigen lamellenartigen Steg anzuformen. Derartige dünne anzugießende Stege lassen sich in der Regel nicht ohne Beschädigung der Form entnehmen.

Aus dem älteren veröffentlichten Patent 35 04 638 ist zwar die Anwendung einer Vorrichtung zur lösbaren Befestigung einer zahntechnischen Teilprothese an Kronen oder anderen restgebiß-seitigen Gegenstücken an einem Rillenschultergeschiebe vorgeschlagen worden, die teleskopierend arbeitet, doch fehlen jegliche Hinweise auf eine praktikable Ausgestaltung einer solchen Verbindungsvorrichtung an einem konzeptionierbaren dentaltechnischen Geschiebe.

Eine besonders montagegünstige Anordnung der Verriegelungsvorrichtung wird mit einem Geschiebe nach den Ansprüchen 2, 3 und 4 beansprucht. Bei einer solchen Ausführungsart ist es möglich, das eigentliche Verriegelungselement nachträglich am Patrizenteil einzusetzen und zu befestigen.

Weitere erfindungswesentliche Merkmale werden anhand der nachfolgenden Beschreibung eines Ausführungsbeispieles erläutert. Es zeigen:

Fig. 1     eine perspektivische Ansicht eines Patrizenteiles mit Verriegelungsvorrichtung im eingedrückten Zustand des Riegelbolzens vor dem Einsatz in das Matrizenteil,

Fig. 2     eine perspektivische Ansicht des zugehörigen Matrizenteiles,

Fig. 3     eine perspektivische Darstellung des Patrizenteiles in Fig. 2 mit dem Aufnahmegehäuse für ein Riegelgehäuse,

Fig. 4     eine perspektivische Ansicht des zugehörigen Riegelgehäuses mit dem Riegelbolzen und

Fig. 5     einen Schnitt nach der Linie I - I in Fig. 4.

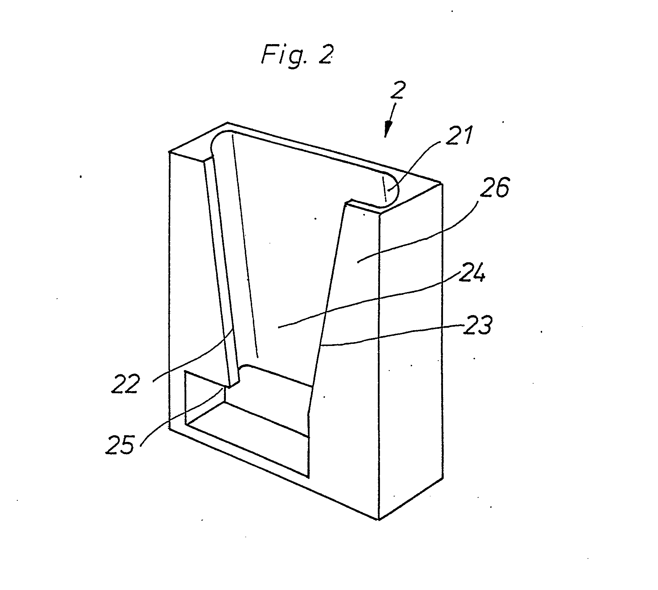

Das in Figur 2 dargestellte Matrizenteil 2 wird in der Regel intrakoronal ausgebildet, es kann jedoch auch durch Anlötung restgebißseitig befestigt werden. Ein solches Matrizenteil 2 besitzt in der Art einer schwalbenschwanzförmigen T-Nut eine sich nach unten konisch verjüngende Führungsfläche 21. Der Durchbruch 24 an der Vorderwand 26 ist ebenfalls konisch ausgebildet. Die beiden Durchbruchkanten tragen die Ziffern 22 und 23. Unterhalb der Durchbruchkante 22 ist eine Nase 25 gebildet, die das Gegenelement zu einem verschiebbaren Riegel 51 am Patrizenteil 1 bildet.

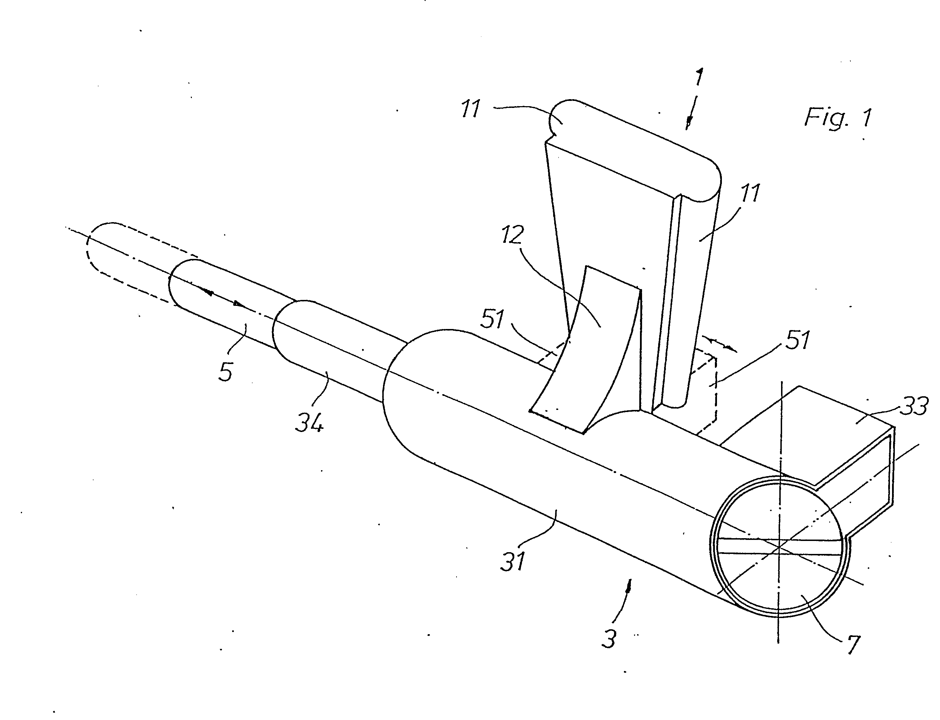

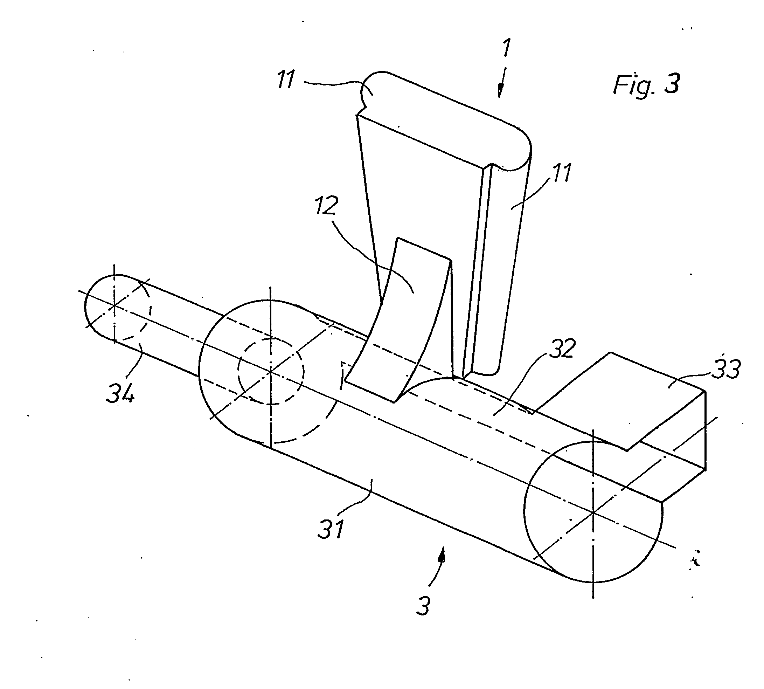

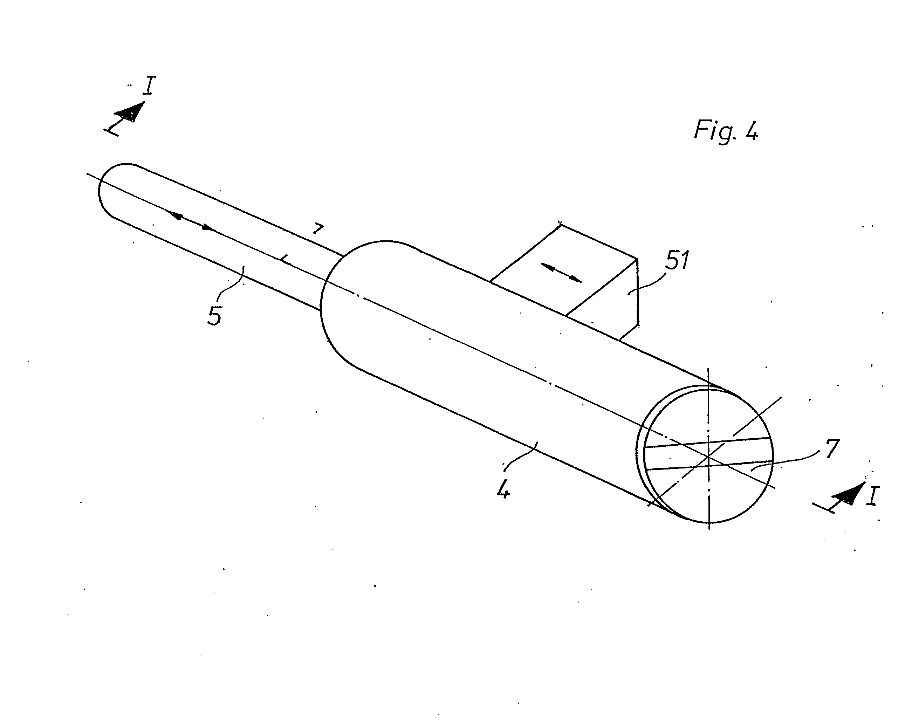

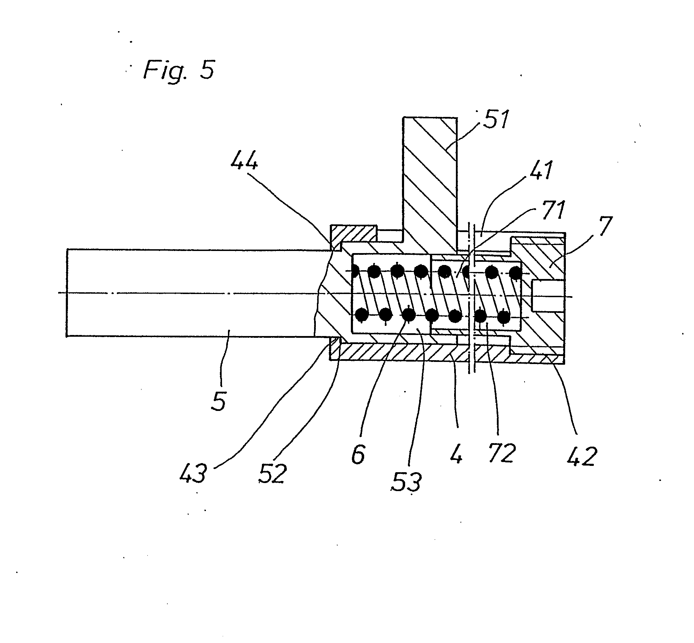

Das aus den Figuren 1 und 3 erkennbare Patrizenteil 1 weist entsprechende Führungsflanken 11 auf. Es ist sich nach unten verjüngend ausgebildet. An seiner Rückseite ist im unteren - im situ schleinhautnahen - Bereich mit dem Verbindungssteg 12 quergerichtet zur Einschieberichtung des Patrizenteiles 1 ein rohrförmiges Aufnahmegehäuse 3 für das insgesamt mit der Ziffer 4 bezeichnete Riegelgehäuse gehalten. Dieses zylindrische Aufnahmegehäuse 3 ist an seinem Mantel 31 mit einer Schlitzführung 32 versehen. Im vorderen Bereich ist ein im Querschnitt schlüssellochförmiger Gehäuseansatz 33 vorgesehen. Am anderen Ende ist ein Rohransatz 34 vorhanden. In dieses Aufnahmegehäuse 3 ist von der Seite des Gehäuseansatzes 33 her das aus den Figuren 4 und 5 ersichtliche Riegelgehäuse mit dem Verriegelungsbolzen 5 und dem herausstehenden Riegel 51 einschiebbar. Nach dem vollständigen Einschieben des Riegelgehäuses 4 wird dieses im Aufnahmegehäuse 3 befestigt, vorzugsweise verklebt. Der Bolzen 5 ragt dabei mit seinem Ende aus dem Rohransatz 34 heraus. Der Riegel 51 ragt unter dem Patrizenteil 1 hinweg in Richtung Matrizenteil 2 vor.

Wie aus Figur 5 erkennbar, ist der Verriegelungsbolzen 5 im zylindrischen Riegelgehäuse 4 aufgenommen. Rechtwinklig abstehend ist an ihm der Riegel 51 angeformt, der durch den Längsschlitz 41 im Gehäuse 4 nach außen ragt. In einer hohlen Aufnahme 53 des Verriegelungsbolzens 5 ist eine Druckfeder 6 eingesetzt, die sich mit ihrem anderen Ende in einem Rohreinsatz 71 an einem Gewindestopfen 7 abstützt, der nach außen bündig in das Riegelgehäuse 4 eingeschraubt ist. Zur Abdichtung gleitet dabei der Rohransatz 71, in dem der Hohlraum mit der Ziffer 72 bezeichnet ist, in der Federaufnahme 53 des Verriegelungsbolzens 5.

Die Druckfeder 6 drückt im montierten Zustand den Verriegelungsbolzen 5 mit seinem Ansatz 52 gegen den Boden 43 im Riegelgehäuse. Durch diesen Boden bzw. dessen Bohrung 44 ist der Verriegelungsbolzen 5 nach außen geführt und daher von außen gegen den Federdruck verschiebbar, wobei der Riegel 51 verschoben wird. Mit der Ziffer 42 ist das Innengewinde im Riegelgehäuse 4 für die Einschraubung des Gewindestopfens 7 bezeichnet.

Zum Einsetzen des Patritzenteiles 1 mit seiner Verriegelungsvorrichtung wird der Verriegelungsbolzen 5 gegen den Druck der Feder 6 in das Riegelgehäuse 4 eingeschoben. Diese Situation ist in Figur 1 dargestellt. Gestrichelt ist die Stellung des Riegels 51 und des Verriegelungsbolzens 5 angedeutet, in der der Verriegelungsbolzen 5 vom Druck entlastet ist. In dieser Stellung befindet sich der Riegel 51 nach dem Einsetzen des Patrizenteiles 1 in das Matrizenteil 2 unter der Nase 25, so daß das Patrizenteil gegen das Matrizenteil verriegelt ist.

Zur Lösung des Geschiebes wird der Verriegelungsbolzen 5 wieder in das Riegelgehäuse 4 von außen eingedrückt, so daß das an der Teilprothese sitzende Patrizenteil 1 ohne Beanspruchung der Restgebißseite herausgenommen werden kann.

Patentansprüche

1. Dentaltechnisches Geschiebe mit einem restgebißseitigen Matrizenteil (2) und einem darin mit einer Gleitführung aufnehmbaren prothesenseitigen Patrizenteil (1), sowie einer die beiden Teile gegeneinander festsetzenden, lösbaren Verriegelungsvorrichtung (45,51,25) mit einem am Patrizenteil (1) gehaltenen Riegelgehäuse (4), in dem ein Verriegelungsbolzen (51) mit einem zum Matrizenteil (2) gerichteten Verriegelungselement (51) angeordnet ist, welches im Zugriff von außen gegen einen Federdruck längs im Riegelgehäuse (4) verschiebbar ist und ir Ruhestellung in das Matrizenteil (2) verriegelnd eingreift, dadurch gekennzeichnet, daß im unteren - in situ schleimhautnahen - Bereich des Patrizenteiles (1) ein Aufnahmegehäuse (3) befestigt ist, in welches das Riegelgehäuse (4) eingeschoben und fixiert ist und das Verriegelungselement ein senkrecht zur Schieberichtung des Patrizenteiles (1) abstehender Riegel (51) am Verriegelungsbolzen (5) ist, welcher Riegel (51) durch einen Längsschlitz (41) im Riegelgehäuse (4) nach außen ragt und durch eine Schlitzführung (32) des Mantels (31) des Aufnahmegehäuses (3) nach außen das Patrizenteil (1) überragt und daß das Matrizenteil (2) eine konische schwalbenschwanzförmige Führungsfläche (21) aufweist, die zum Patrizenteil (1) hin gerichtet einen Durchbruch (24) besitzt, wobei eine untere Durchbruchkante das Verriegelungselement in Form einer Nase (25) für den daran festsetzbaren Riegel (51) bildet.

2. Geschiebe nach Anspruch 1, dadurch gekennzeichnet, daß der Verriegelungsbolzen (5) mit einer koaxialen Federaufnahme (53) in Form eines zylindrischen Hohlraumes ausgebildet ist, in den mit einem geringen Wandabstand ein in das Riegelgehäuse (4) eingesetzter Gewindestopfen (7) mit einem Rohransatz (71) teilweise eingreift, wobei die Druckfeder (6) sich zwischen Stopfen (71) und Verriegelungsbolzen (5) nach außen abgedeckt abstützt.

3. Geschiebe nach Anspruch 2, d a d u r c h  g e k e n n z e i c h n e t , daß das Riegelgehäuse (4) derart gestaltet ist, daß der Gewindestopfen in das zylindrische Riegelgehäuse (4) bündig von der Stirnseite her einsetzbar ist.

4. Geschiebe nach Anspruch 1, d a d u r c h  g e k e n n z e i c h n e t , daß das rohrförmige, längsgeschlitzte Aufnahmegehäuse (3) an seiner Einschiebeseite einen im Querschnitt schlüssellochförmigen Gehäuseansatz (33) aufweist, durch den das Riegelgehäuse (4) mit dem herausragenden Riegel (51) ein- setzbar ist.

0241756

Fig. 1

115

1
11
11
51
51
12
33
7
3
31
34
5

Fig. 2

2

21

26

24

23

22

25

Fig. 3

11

1

11

12

32

33

34

31

3

3/5

0241756

Fig. 4

0241756

Fig. 5

0241756

Europäisches
Patentamt

**EUROPÄISCHER RECHERCHENBERICHT**

Nummer der Anmeldung

EP 87 10 4154

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| P,A D | DE-A-3 504 638 (P. HACKSTEIN)  * Figuren 1-4 * | 1-4 | A 61 C 13/225 |
| A | EP-A-0 085 781 (F. PEDRAZZINI)  * Figur 9a; Seite 14, Zeilen 3-5 * | 1 | |
| A,D | EP-A-0 019 590 (METAUX PRECIEUX) | 1-4 | |
| A,D | DE-A-1 516 434 (W. DIETRICH) | 2 | |

RECHERCHIERTE SACHGEBIETE (Int. Cl.4)

A 61 C

Der vorliegende Recherchenbericht wurde für alle Patentansprüche erstellt

| Recherchenort | Abschlußdatum der Recherche | Prüfer |
|---|---|---|
| DEN HAAG | 27-07-1987 | RAKOWICZ,J.M. |